Europäisches Patentamt

European Patent Office

Office européen des brevets

(19)

(11) Veröffentlichungsnummer: **0 205 804**
**B1**

(12) # EUROPÄISCHE PATENTSCHRIFT

(45) Veröffentlichungstag der Patentschrift: **13.06.90**

(21) Anmeldenummer: **86105453.4**

(22) Anmeldetag: **19.04.86**

(51) Int. Cl.⁵: **B 62 D 25/02**, B 62 D 31/00

(54) Karosserieseitenwand für Kraftfahrzeuge.

(30) Priorität: **15.06.85 DE 3521607**

(43) Veröffentlichungstag der Anmeldung:
**30.12.86 Patentblatt 86/52**

(45) Bekanntmachung des Hinweises auf die
Patenterteilung:
**13.06.90 Patentblatt 90/24**

(84) Benannte Vertragsstaaten:
**DE FR GB IT SE**

(56) Entgegenhaltungen:
DE-A-2 428 477
DE-A-2 432 238
DE-A-2 931 467
DE-B-1 924 853
US-A-4 471 992

(73) Patentinhaber: **FORD-WERKE
AKTIENGESELLSCHAFT**
**Ottoplatz 2 Postfach 21 03 69**
**D-5000 Köln 21 (DE)**
(84) **DE IT SE**

(73) Patentinhaber: **FORD MOTOR COMPANY
LIMITED**
**Eagle Way**
**Brentwood Essex CM13 3BW (GB)**
(84) **GB**

(73) Patentinhaber: **FORD FRANCE SOCIETE
ANONYME**
**344 Avenue Napoléon Bonaparte B.P. 307**
**F-92506 Rueil Malmaison Cedex (FR)**
(84) **FR**

(72) Erfinder: **Hürten, Oskar**
**Weissdornweg 130**
**D-5000 Köln 30 (DE)**
Erfinder: **Vogt, Hans**
**Kielsberg 36**
**D-5063 Overath (DE)**
Erfinder: **Stutenkemper, Paul**
**Sperberweg 26**
**D-5024 Pulheim (DE)**

Courier Press, Leamington Spa, England.

EP 0 205 804 B1

# EP 0 205 804 B1

(74) Vertreter: **Ritzkowsky, Harald, Dipl.-Ing.**
**Ford-Werke Aktiengesellschaft Patentabteilung**
**Z/DRR-2 Ottoplatz 2**
**D-5000 Köln 21 (DE)**

**Beschreibung**

Die Erfindung bezieht sich auf eine Karosserieseitenwand für Kraftfahrzeuge, insbesondere von eine seitliche hintere Türöffnung aufweisenden Personen-und Kombi-Kraftwagen.

Aus der DE—OS 24 28 477 ist eine Karosserieseitenwand für Kraftfahrzeuge dieser Art bekannt, bei der eine aus einem Seitenwand-Innenblech und einem Seitenwand-Außenlech gebildete Hecksäule über ein winkelfömiges Verstärkungsblech einem den vorderen Teil des Radhauses begleitenden, kastenförmigen Träger bildet, über den die Hecksäule mit dem Längsträger unter dem Einstieg verbunden werden soll. Über den oberen Verlauf der Hecksäule und über den vorderen Anschluß des kastenförmigen Trägers ist hierbei jedoch nichts näheres ausgesagt.

Aus der DE—AS 24 32 238 ist eine Karosserieseitenwand für Kraftfahrzeuge bekannt, bei der ein U-förmig profiliertes Verstärkungsblech vom hinteren Dachquerträger längs des oberen Randes des Seitenwand-Innenbleches verläuft und dann nach unten zum hinteren Teil des Radhauses hin abgebogen ist und im Wesentlichen über seine gesamte Länge mit dem Seitenwand-Innenblech verschweißt ist und einen kastenförmigen Träger bildet. Diese Anordnung eines Verstärkungsbleches soll eine Erhöhung der Energieaufnahme der Karosseriestruktur im Falle eines Heckaufpralles sicherstellen.

Aus der DE—PS 29 31 467 ist eine Karosserieseitenwand für Kraftfahrzeuge bekannt, bei der zwischen einem eine Hecksäule bildenden Seitenwand-Innenblech und einem Seitwand-Außenblech ein U-förmig profiliertes Verstärkungsblech angeordnet ist, das sich mit seinem unteren Ende auf der Wölbung des Radhauses abstützt. Durch dieses Verstärkungsblech soll insbesondere eine bessere Quersteifigkeit der Karroserie erzielt werden.

Bei den beiden letztgenannten bekannten Karosserieseitenwanden wird der Gestaltfestigkeit im Bereich der seitlichen hinteren Türöffnung kaum Beachtung geschenkt, da es hierbei offensichtlich um Kraftfahrzeuge handelt, bei denen ein erheblicher hinterer Karosserieüberhang genügend Verformungsweg für den Fall eines Heckaufpralls zur Verfügung stellt.

Die Aufgabe der Erfindung ist es, ausgehend von einer Karosserieseitenwand gemäß dem Oberbegriff des Patentanspruchs 1 durch ein einziges Verstärkungsblech die Gestaltfestigkeit im Bereich der seitlichen hinteren Türöffnung derart zu erhöhen, daß sie bei einem Heckaufprall trotz kurzen Hecküberhangs keine Verformungen erleidet, die ein Öffnen der Fahrzeugtür nach dem Unfall beeinträchtigen würden.

Gemäß der Erfindung wird diese Aufgabe gelöst, indem bei einer Karosserieseitenwand gemäß dem Oberbegriff des Patentanspruchs 1 die im Kennzeichteil des Patentanspruchs 1 aufgezeigten Maßnahmen angewendet werden.

In den Anspruchen 2 und 3 sind weitere zweckmässige Einzelheiten der Erfindung erläutert.

Dadurch, daß ein U-förmig profiliertes Verstärkungsblech vom Dachrahmen ausgehend über die Hecksäule und den vorderen Teil des Radhauses die Türöffnung begleitend mit den Seitenwand-Innenblech und dem Seitenwand-Außenblech einem vom Dachrahmen bis zum Türschweller verlaufenden kastenförmigen Träger bildend verbunden ist, wird eine Gestaltfestigkeit in dem Türöffnungsbereich erzielt, wie er durch die bekannten aus Teil-Verstärkungsblechen bestehenden kastenförmigen Trägern nicht oder nur mit größerem Gewichtsaufwand erreicht werden kann.

Dadurch, daß das einstückige Verstärkungsblech im Bereich der Hecksäule mit dem Seitenwand-Außenblech und dem Seitenwand-Innenblech einen einen Diagonalsteg aufweisenden kastenförmigen Träger bildet, wird eine sehr kompakte gestaltfeste Hecksäule erzielt.

Dadurch, daß das einstückige Verstärkungsblech im Bereich des vorderen Teiles des Radhauses mit dem Seitenwand-Außenblech zwei parallel laufende kastenförmige Träger bildet, wird insbesondere in diesem bogenförmigen Bereich eine Gestaltfestigkeit erzielt, die ein unfallbedingtes Verformen der Türöffnung weitgehend vermeidet.

Die Erfindung wird anhand eines in den beiliegenden Zeichnungen gezeigten Ausführungsbeispieles näher erläutert.

Es zeigt:

Fig. 1 eine Teilansicht einer Karosserieseitenwand gemäß der Erfindung mit in Strich-Punkt-Strich-Linien angedeutetem Verstärkungsblech;

Fig. 2 eine Seitenansicht des einstückigen Verstärkungsbleches der Erfindung;

Fig. 3 eine Ansicht des Radhauses mit dem Anschlußbereich des Verstärkungsbleches;

Fig. 4 eine Innenansicht des Seitenwand-Innebleches;

Fig. 5 einen Schnitt entlang der Linie V—V in Fig. 1;

Fig. 6 einen Schnitt entlang der Linie VI—VI in Fig. 1 und

Fig. 7 einen Schnitt entlang der Linie VII—VII in Fig. 1.

Fig. 8 einen Schnitt entlang der Linie VIII—VIII in Fig. 1.

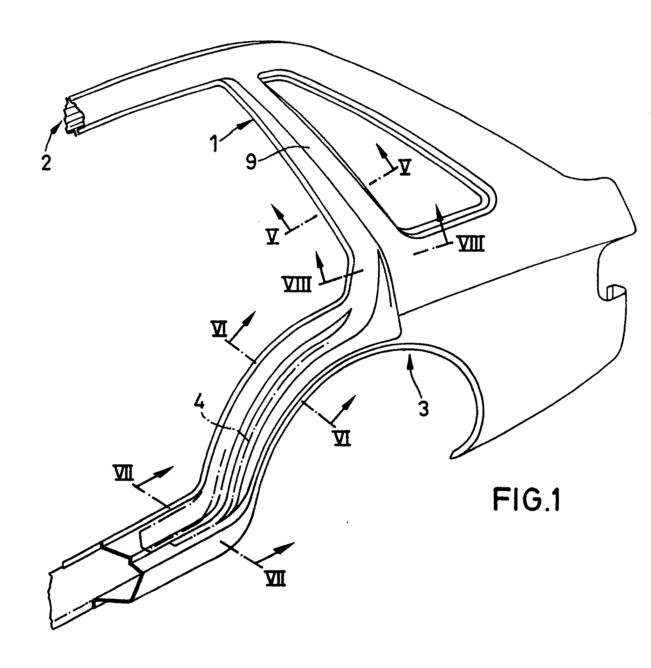

Wie aus Fig. 1 zu ersehen ist, besteht eine Karosserieseitenwand für ein Kraftfahrzeug im Wesentlichen aus einem Seitenwand-Außenblech 1, einem Seitenwand-Innenblech 2, einem Radhaus 3 und einem U-förmig profiliertem einstückigen Verstärkungsblech 4.

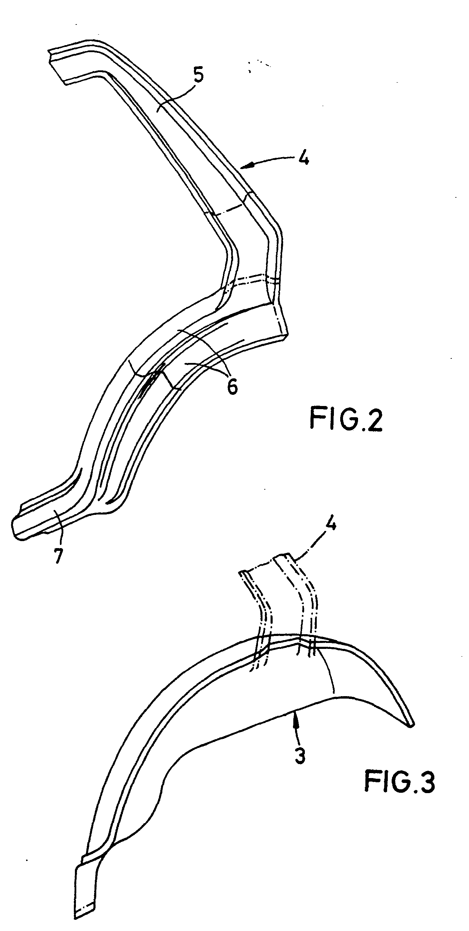

Wie aus Fig. 2 zu ersehen ist, weist das einstükkige Verstärkungsblech 4 in seinem oberen Teil einem nach außen offenen U-förmigen Querschnitt 5 mit abgewinkelten Schweißflanschen auf. In dem unteren, das Radhaus 3 begleitenden Teil des einstückigen Verstärkungsbleches 4 weist dieses zwei parallel laufende U-förmige Querschnitte 6 auf, die im Anschlußbereich des Türschwellers in einem horizontalen Teil mit einem V-förmigen Querschnitt 7 und abgewinkelten Schweißflanschen übergeht.

Wie aus Fig. 3 zu ersehen ist, besteht das Radhaus 3 nur aus einem inneren Radhausblech von üblicher Formgebung.

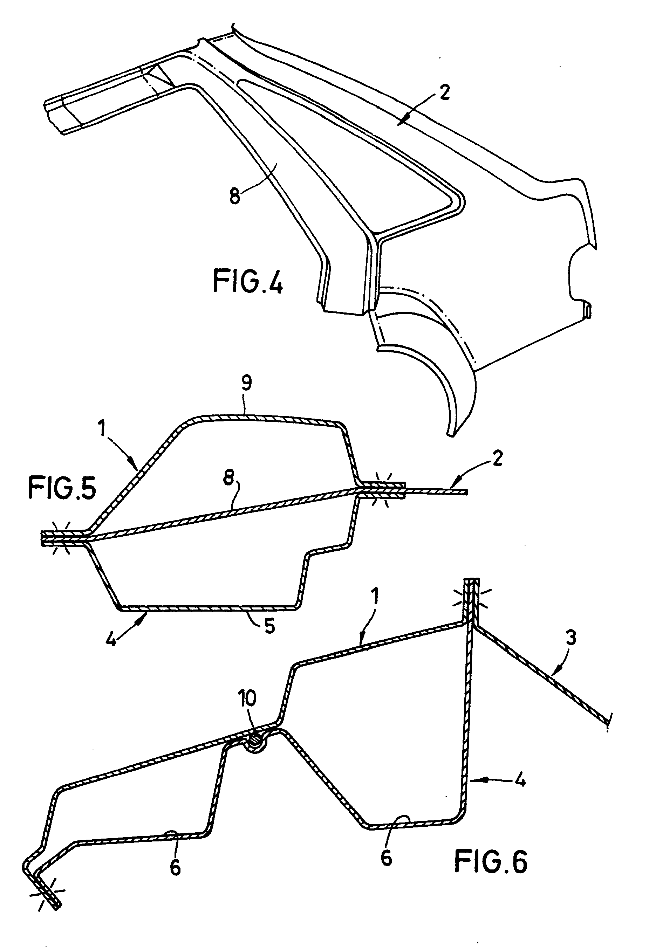

Aus. Fig. 4 ist die Form des Seitenwand-Innenbleches 2 zu erzehen, as in seinem einen, einen Teil der Hecksäule bildenden Bereich 8 verhältnismäßig eben und flach ausgebildet ist, um den entsprechenden U-förmig profilierten Abschnitt 9 des Seitenwand-Außenbleches 1 zu schließen. Mit diesem verhältnismäßig ebenen Bereich 8 wird gleichzeitig der die U-förmige Prolifierung 5 aufweisende obere Teil des Verstärkungsbleches 4 über entsprechend abgestellte Flanschbleche in üblicher Weise durch Punktschweißen verbunden. Das Seitenwand-Außenblech 1, das Seitenwand-Innenblech 2 und das Verstärkungsblech 4 bilden eine Hecksäule mit einem kastenförmigen, durch einen Diagonalsteg verstärkten Trägerprofil (siehe Fig. 5).

Wie aus Fig. 4 zu ersehen ist, endet der ebene Bereich 8 des Seitenwand-Innenbleches 2 auf der Höhe des Radhauses 3 und der die beiden parallel laufenden U-förmigen Querschnitte 6 aufweisende Teil des Verstärkungsbleches 4 wird über entsprechende Flanschbereiche durch Punktschweißen bzw. über vorgesehene Klebebereiche 10 mit dem Seitenwand-Außenblech 1 verbunden (siehe Fig. 6).

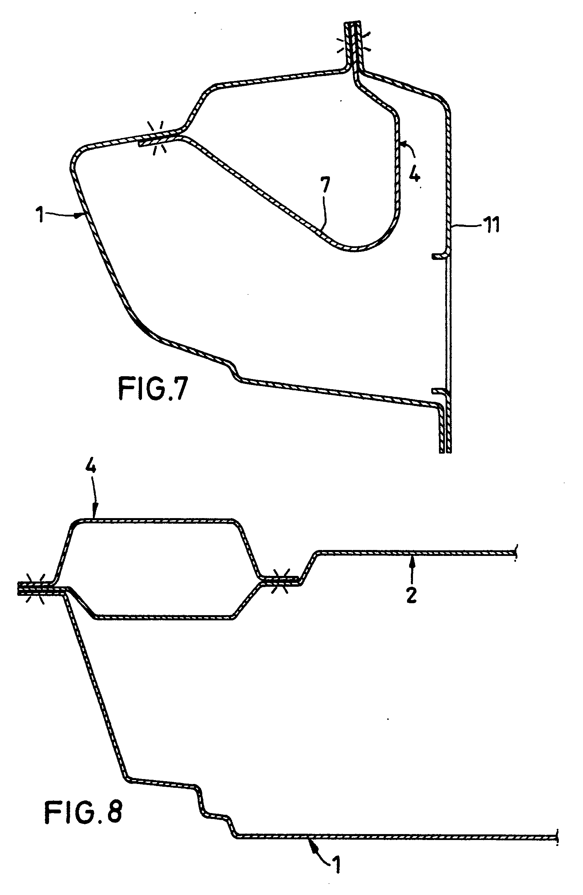

Wie aus Fig. 7 zu ersehen ist, bildet das Seitenwand-Außenblech 1 mit dem unteren, den V-förmigen Querschnitt 7 ausweisenden Teil des Verstärkungsbleches 4 einen kastenförmigen Träger, der bogenförmig in den Bereich des Türschwellers übergreift und hier einen Teil parallel zum längslaufenden Wangenblech 11 der Bodengruppe der Karosserie verläuft.

Wie aus Fig. 8 zu ersehen ist, sind im Bereich der Gürtellinie der Karosserie sowohl das Seitenwand-Innenblech 2 als auch das Seitenwand-Außenblech 1 gleichzeitig mit dem Verstärkungsblech 4 durch Punktschweißen verbunden.

## Patentansprüche

1. Karosserieseitenwand für Kraftfahrzeuge, insbesondere von eine seitliche hintere Türöffnung aufweisenden Personen- und Kombi-Kraftwagen, wobei eine im Wesentlichen aus einem Seitenwand-Innenblech und einem Seitenwand-Außenblech gebildete Hecksäule über ein Verstärkungsblech einen den vorderen Teil des Radhauses begleitenden, kastenförmigen Träger bilden, dadurch gekennzeichnet, daß ein U-förmig profiliertes, einstückiges Verstärkungsblech (4) die Türöffnung vom Dachrahmen ausgehend über die Hecksäule und den vorderen Teil des Radhauses (3) begleitend mit dem Seitenwand-Innenblech und dem Seitenwand-Außenblech (1) einen durchgehenden vom Dachrahmen bis zum Türschweller verlaufenden kastenförmigen Träger bildend verbunden ist.

2. Karosserieseitenwand nach Anspruch 1, dadurch gekennzeichnet, daß das einstückige Verstärkungsblech (4) im Bereich der Hecksäule mit dem Seitenwand-Außenblech (1) und dem Seitenwand-Innenblech (2) einen einen Diagonalsteg aufweisenden kastenförmigen Träger bildet.

3. Karosserieseitenwand nach den Ansprüchen 1 und 2, dadurch gekennzeichnet, daß das einstückige Verstärkungsblech (4) im Bereich des vorderen Teiles des Radhauses (3) mit dem Seitenwand-Außenblech (1) zwei parallel laufende kastenförmige Träger bildet.

## Revendications

1. Panneau latéral de carrosserie pour véhicules automobiles, en particulier de voitures de tourisme et de véhicules utilitaires présentant une ouverture de porte arrière latérale, dans lequel un montant arrière, essentiellement constitué d'une tôle intérieure de panneau latéral et d'une tôle extérieure de panneau latéral, forme, par une tôle de renfort, un support en forme de caisse, accompagnant la partie avant du logement de roue, caractérisé en de qu'une tôle de renfort (4) d'une seule pièce, profilée en U, en partant du cadre du toit, accompagnant l'ouverture de porte, par le montant arrière et la partie avant du logement de roue (3), est reliée à la tôle intérieure de panneau latéral et à la tôle extérieure de panneau latéral (1), en formant un support en forme de caisse continu, depuis le cadre du toit jusqu'au bas de porte.

2. Panneau latéral de carrosserie selon la revendication 1, caractérisé en ce que la tôle de renfort (4) d'une seule pièce forme, avec la tôle extérieure de panneau latéral (1) et la tôle intérieure de panneau latéral (2), un support en forme de caisse présentant une diagonale, dans la zone du montant arrière.

3. Panneau latéral de carrosserie selon les revendications 1 et 2, caractérisé en ce que la tôle de renfort (4) d'une seule pièce forme, dans la zone de la partie avant du logement de roue (3), avec la tôle extérieure de paroi latérale (1), deux supports en forme de caisse parallèles.

## Claims

1. A bodywork side wall for motor vehicles, in particular of passenger cars and estate cars comprising a rear side door opening, a rear pillar, which is essentially formed by a side wall inner plate and a side wall outer plate, forming by way of a reinforcement plate a box support which is adjacent to the front part of the wheel housing, characterized in that a one-piece reinforcement plate (4), which is profiled in a U shape and is adjacent to the door opening starting from the roof frame by way of the rear pillar and the front part of the wheel housing (3), is connected to the side wall inner plate and the side wall outer plate (1) while forming a continuous box support extending from the roof frame to the sill.

2. A bodywork side wall according to Claim 1, characterized in that in the region of the rear pillar the one-piece reinforcement plate (4) together with the side wall outer plate (1) and the side wall inner plate (2) forms a box support comprising a diagonal web.

3. A bodywork side wall according to Claims 1 and 2, characterized in that in the region of the front part of the wheel housing (3) the one-piece reinforcement plate (4) together with the side wall outer plate (1) forms two box supports extending parallel.

FIG.1

FIG.2

FIG.3

FIG.4

FIG.5

FIG.6

FIG.7

FIG.8